(19) Europäisches Patentamt
European Patent Office
Office européen des brevets

(11) Publication number: **0 429 044 A1**

## (12) EUROPEAN PATENT APPLICATION

(21) Application number: 90122084.8

(22) Date of filing: 19.11.90

(51) Int. Cl.⁵: **C22B 7/00, C22B 3/20**

(30) Priority: 21.11.89 US 440125

(43) Date of publication of application:
**29.05.91 Bulletin 91/22**

(84) Designated Contracting States:
**BE CH DE ES FR GB LI LU NL SE**

(71) Applicant: **GC GALVANO CONSULT GmbH**
**Frankfurter Strasse 74**
**W-6080 Gross-Gerau(DE)**

(72) Inventor: **Weyls, John**
**P.O. Box 81 508**
**Cleveland, OH 44181(US)**
Inventor: **Lindemann, Ray Charles**
**621 Chisolm Street**
**Montgomery, AL 36110(US)**

(74) Representative: **Berendt, Thomas, Dr.rer.nat.**
**Dipl.-Chem.**
**Patentanwälte Dr.rer.nat. Dipl.-Chem. Th.**
**Berendt Dr.Ing. Hans Leyh Dipl.-Ing. Hartmut**
**Hering Innere Wiener Strasse 20**
**W-8000 München 80(DE)**

(54) **Process for recovering metals from aqueous solutions.**

(57) In a process for recovering metals from aqueous solutions containing same in the form of bivalent ions and monovalent ions besides other dissolved substances the steps of adjusting the pH of the solution to a value of 0,1 to 8, adding an at least equimolar amount of oxalic acid, heating the solution to a temperature of between 20 and 100° C, isolating the metal oxalate precipitate being formed and heating same above its decomposition temperature.

Said aqueous solution is preferably a waste solution from electroplating, scouring or film developing processes containing bivalent ions of iron, copper, manganese, lead, cadmium, tin, cobalt, zinc, nickel and silver and more than 90 % by weight of water.

EP 0 429 044 A1

## PROCESS FOR RECOVERING METALS FROM AQUEOUS SOLUTIONS

The invention relates to the recovery of metals from its aqueous solutions. In particular the invention relates to the recovery of bivalent and monovalent heavy metals such as copper, manganese, lead, cadmium, tin, iron, cobalt, zinc, nickel and silver from aqueous solutions such as electroplating baths, scouring solutions, waste water, spent film developing baths and other aqueous solutions containing said metals.

It is known to recover metals such as manganese or cobalt from chemical wastes, in particular from an aqueous organic medium, by adding sodium, potassium or ammonium oxalate (see U.S. patent 4,488,999).

This process, however, has been particularly used for the recovery of traces of metal catalysts used in the oxidation of alkylaromatic compounds to form aromatic carboxylic acids such as benzoic, phthalic acids. In this process the water should be in the range of 1 to 50 % by weight and the use of a particular alkali or ammonium oxalate depends from the water content of the solution as well as from the presence of an organic water miscible solvent such as an alcohol, ether or ketone. In order to obtain an easily filtrable precipitate heating to 50 - 160°C is required which involves the hazard of ignition of the organic solvent present.

Object of the invention is to recover a large range of metals in particular those forming bivalent ions in aqueous solutions, such as waste from electroplating, film development and other solutions originating from chemical processing plants. Further object of the invention is to minimize the metal content of chemical wastes. These objects and other objects are reached by the process of the invention which allows the production of said metals in highly pure form from wastes thus reducing disposal costs and pollution problems of these wastes and to allow for the recycling of valuable metals at reasonable costs.

The process for recovering metals from aqueous solutions of the invention comprises adjusting the pH of the solution to a value of 0,1 to 8, adding sufficient oxalic acid to allow for an at least equimolar amount with respect to the total metal content to be recovered, heating the solution to a temperature of between 20 and 100°C, isolating the metal oxalate precipitate and heating same to a temperature above the decomposition temperature.

If desired the crystal size of the metal oxalate precipitate formed may be controlled by stirring with or without additional heating in order to obtain an easily filtrable precipitate.

The pH of the starting solution is adjusted, if required, by adding an inorganic acid, such as sulfuric or nitric acid. The addition of oxalic acid, however, also contributes to the pH adjustment and may be calculated as acid value in the process.

The starting solution may originate from an electroplating process such as a waste electroplating bath for copper, iron, zinc and nickel. Further waste film developers containing silver may be treated in order to recover metallic silver. Other waste solutions inter alia manganese and the metals already mentioned as well as other metals which may form bivalent ions such as rare earth metals or catalyst solutions from chemical processes of various kinds may be treated according to the invention.

It has been found that in particular scouring solutions containing iron and other metals may be particularly suited for a treatment according to the invention.

Although the water content of the solutions to be treated is usually higher than 90 % by weight a range of between 95 and 99,5 % by weight being preferred since with lower water contents precipitation of the metal oxalate may take much more time.

The presence of other in particular organic constituents of the solutions is as a rule not detrimental to carrying out the process of the invention. If side reactions are to be feared to affect the precipitation of metal oxalate it may be advisable to add a reducing agent to the solution before adding oxalic acid which allows to reduce any trivalent or tetravalent metal ions to the bivalent form.

Further it may be advisable to first clear the solution to be treated with, e.g. charcoal, bentonite, an ion exchange resin or other known means for the purpose of mechanical or ion exchange clearing of aqueous solutions containing flocculent or otherwise precipicating material which may disturb the formation and isolation of a metal oxalate precipitate.

It is possible to use two or more of these agents in sequence or in a combination.

The invention is further illustrated by the following examples: **Example 1**

To 500 ccm of an used industrial scouring solution for printed circuits comprising 250 ccm of a 0,1 molar cupric sulfate solution and 250 ccm of a 0,1 molar sulfuric acid was combined with 500 ccm of a 0,12 molar oxalic acid solution the solvent being water in all cases.

The cupric oxalate precipitate formed was collected by filtration. The filtrate contained only a minor amount of 189 ppm of copper.

The precipitate was heated until decompositon occured. The isolated copper was 99,99 % pure and could be used again to prepare a scouring solution. For comparison the example was repeated but the solutions of cupric sulfate and of sulfuric acid adjusted to a pH of 7 before adding the oxalic acid solution. The copper content remaining in the filtrate amounted to 395 ppm thus indicating a much lower yield of Cu. **Example 2**

To 1000 ccm of a used aqueous scouring solution containing 132 g of sodium peroxodisulfate, 39 g of sulfuric acid and 28 g of copper (0,44 mole/l) there was added 1 l of a solution of 55,5 g (0,44 mole of $H_2C_2O_y.2H_2O$) of oxalic acid in water.

The copper was practically completely precipitated and could be isolated after heating to the decomposition temperature under reduced pressure.

**Claims**

1. A process for recovering metals from aqueous solutions containing same in the form of bivalent ions in addition to other dissolved substances which comprises adjusting the pH of the solution to a value of 0,1 to 8, adding sufficient oxalic acid to allow for an at least equimolar amount with respect to the total metal content to be recovered, heating the solution to a temperature of between 20 and 100°C, isolating the metal oxalate precipitate formed and heating same to a temperature above its decomposition temperature.

2. A process as claimed in claim 1 wherein the aqueous solution is a waste solution from electroplating, scouring or film developing processes containing bivalent ions of iron, copper, manganese, lead, cadmium, tin, cobalt, zinc, nickel and silver.

3. A process as claimed in claim 1 wherein the amount of water in the solution is higher than 90 % by weight.

4. A process as claimed in claim 3 wherein the amount of water in the solution is between 95 to 99,5 % by weight.

5. A process as claimed in claim 1 wherein the solution is treated with a clearing agent before adjusting the pH, adding oxalic acid and heating.

6. A process as claimed in claim 5 wherein the clearing agent is one or more members of a group consisting of charcoal, bentoniteand a ion exchange resin.

7. A process as claimed in claim 1 wherein the solution is treated with a reducing agent for tri- or tetravalent metals before adding oxalic acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WPI/DERWENT, accession no. 78-64715A [36], Derwent Publications Ltd, London, GB; & SU-A-74 047 156 (SEC NON-FERR METALS) 29-07-1974 * Whole abstract * | 1,2 | C 22 B 7/00 C 22 B 3/20 |
| A | US-A-4 495 158 (RITSKO et al.) * Column 2, lines 41-68; column 3, lines 1-40; claims 1,10 * | 1 | |
| A | US-A-4 293 332 (WANG et al.) * Claim 1 * | 1 | |
| A | US-A-4 608 084 (SCHEITHAUER et al.) * Column 2, lines 50-64; claims 1,2 * | 1 | |
| A | PATENT ABSTRACTS OF JAPAN, vol. 11, no. 290 (C-447), 18th September 1987; & JP-A-62 083 433 (SANTOKU KINZOKU KOGYO K.K.) 16-04-1987 * Whole abstract * | 1 | |
| A | US-A-4 259 295 (ZEITLIN et al.) | | |

| | |
|---|---|
| | TECHNICAL FIELDS SEARCHED (Int. Cl.5) |
| | C 22 B |

The present search report has been drawn up for all claims

| Place of search | Date of completion of search | Examiner |
|---|---|---|
| The Hague | 27 February 91 | WITTBLAD U.A. |